# EUROPEAN PATENT APPLICATION

(11) **EP 2 623 771 A1**
(43) Date of publication of application: **07.08.2013**
(21) Application number: 12153863.1
(22) Date of filing: 03.02.2012
(51) Int. Cl.: F03D 1/06, F03D 1/00

(54) **Wind turbine blade mounting element and method of repair**

(71) Applicant: E.On Climate and Renewables UK Ltd., Coventry CV4 8LG (GB)
(72) Inventor: Hillier, Stephen, Coventry, CV4 8LG (GB); Orton, Nick David, Coventry, CV4 8LG (GB)
(74) Representative: Chapman, Helga Claire

(57) **Abstract**

A wind turbine mounting element 10 comprises an attachment part 12 and a blade spar mounting part 14. The attachment part has a bolt hole 16 provided in it. The bolt hole 16 comprises a bolt receiving section 16a and an end section 16b. The bolt receiving section 16a has an internal wall on which an internal thread 18 is provided along at least part of its length. The end section 16b comprises a generally curved internal wall 20 which extends from one end of the bolt receiving section 16a. The end section 16b has an internal wall having a part circular curved profile. In this example, the bolt hole 16 has a generally flat, blind end 22, which extends across the distal end of the internal wall 20 of the end section 16b. The blade spar mounting part 14 extends from the attachment part 12, generally away from the bolt hole 16 in this example. Only part of the length of the blade spar is shown in the drawing.

## Description

The invention relates to a wind turbine blade mounting element, a wind turbine blade comprising the mounting element and a wind turbine comprising the blade. The method also relates to a method of removing a crack defect in a wind turbine blade mounting element.

Wind turbine blades may be connected to a wind turbine generator hub via a mounting element in the form of a generally cylindrical mounting "can". Turbines in which the blade position is adjustable additionally have a blade bearing between the generator hub and the mounting element. The can comprises a generally cylindrical wall, which is coupled to the blade spar of a turbine blade, and a thicker rim section in which a series of threaded bolt holes are formed, via which the can is bolted to the blade bearing or directly to the hub. It has been found that fatigue cracks sometimes form at internal edges within the bolt holes, and extend into the rim section of the can. If undetected, these cracks can propagate around the circumference of the can, resulting in a catastrophic failure of the connection between the turbine blade and the hub. The current maintenance strategy requires periodic inspection of the aluminium can to detect the formation of fatigue cracks and when a problematic crack is detected the aluminium can is replaced. This requires the turbine blade to be removed from site, which can involve significant engineering and transportation costs.

A first aspect of the invention provides a wind turbine blade mounting element comprising:
an attachment part having at least one bolt hole provided therein, the at least one bolt hole comprising a bolt receiving section and an end section, the bolt receiving section having an internal wall having an internal thread provided along at least part of its length and the end section comprising an internal wall which extends from an end of the bolt receiving section and which has an outwardly curved shape; and
a blade spar mounting part extending from the attachment part.

Providing the bolt hole with an end section which has an outwardly curved shape may give the bolt hole a low stress concentration factor within the end section. It may reduce the occurrence of stress induction points within the attachment part and prevent the occurrence of high localised stress at the end of the bolt receiving section. This may prevent the initiation of cracks from the bolt hole in the attachment part and may increase the fatigue life of the mounting element. Preventing the initiation of cracks may prevent crack propagation around the attachment part, and may therefore prevent resulting blade failure. Preventing the initiation of cracks may reduce the required frequency of periodic inspection of the mounting element.

In an embodiment, the end section has a diameter which is greater than a diameter of the bolt receiving section and less than 75 percent of a corresponding width of the attachment part. The curvature of the end section may therefore be maximised without causing unacceptable levels of weakening of the attachment part or increasing stress concentration within the attachment part above an acceptable level.

In an embodiment, the internal wall extends from the end of the bolt receiving section at an angle of between 90 and 20 degrees to the internal wall of the bolt receiving section.

In an embodiment, the internal wall extends from the end of the bolt receiving section at an angle of approximately 60 degrees to the internal wall of the bolt receiving section. This may increase the fatigue life of the mounting element by to up to 3 times the fatigue life of the prior art aluminium can mounting element, which may give a mounting element a fatigue life of up to 30 years.

In an embodiment, the internal wall has a part-circular curved profile.

In an embodiment, the internal wall comprises a first part having a part-circular curved profile and a second part which extends between the end of the bolt receiving section and the second part, the second part having a generally straight shape or being curved in an opposite sense to the first part.

In an embodiment, the end section comprises an internal end which extends across the distal end of the internal wall. The internal end may be generally flat or may have a curved shape.

In an embodiment, the internal wall of the end section has a surface that is substantially free from stress concentration points. This may prevent the occurrence of crack initiation at positions on the internal surface of the end section.

In an embodiment, the attachment part having a plurality of bolt holes provided therein, the bolt holes being arranged in a spaced series.

A second aspect of the invention provides a wind turbine blade comprising:
a blade spar;
a blade outer wall coupled to the blade spar; and
a wind turbine blade mounting element as described above, wherein the blade spar is mounted on the blade spar mounting part.

A third aspect of the invention provides a wind turbine comprising at least one wind turbine blade as described above.

A fourth aspect of the invention provides a method of removing a crack defect in a wind turbine blade mounting element comprising an attachment part and a blade spar mounting part, the attachment part comprising a bolt hole provided therein comprising a bolt receiving section and an end section, the crack defect extending from the end section, the method comprising:
excavating a section of the attachment part around the end section of the bolt hole, the said section including the crack defect, to form an enlarged diameter end section; and
forming an internal wall to the end section, the internal wall extending from an end of the bolt receiving section and having an outwardly curved shape.

The method may enable a section of a mounting element comprising a crack defect to be removed and the end section of the bolt hole to be reshaped to give the bolt hole a lower stress concentration factor within the end section. Reforming the end section to have an outwardly curved shape may reduce the occurrence of stress induction points within the attachment part and prevent the occurrence of high localised stress at the end of the bolt receiving section. This may prevent the initiation of cracks from the bolt hole in the attachment part and may increase the fatigue life of the mounting element. Preventing the initiation of cracks may prevent crack propagation around the attachment part, and may therefore prevent resulting blade failure. Preventing the initiation of cracks may reduce the required frequency of periodic inspection of the mounting element. Forming the internal wall having an outwardly curve shape may enable removal of defects in any components that have initiated in service without needing to replace the entire wind turbine blade mounting element.

In an embodiment, the diameter of the end section is greater than a diameter of the bolt receiving section and less than 75 percent of a corresponding width of the attachment part. The amount of material that is excavated around a crack defect may therefore be maximised without causing unacceptable levels of weakening of the attachment part or increasing stress concentration within the attachment part above an acceptable level.

In an embodiment, the internal wall extends from the end of the bolt receiving section at an angle of between 90 and 20 degrees to the internal wall of the bolt receiving section.

In an embodiment, the internal wall extends from the end of the bolt receiving section at an angle of approximately 60 degrees to the internal wall of the bolt receiving section. This may increase the fatigue life of the mounting element by to up to 3 times its fatigue life prior to removal of the crack defect, which may give a mounting element a fatigue life of up to 30 years.

In an embodiment, the method further comprises forming an internal end to the end section, the internal end extending across the distal end of the internal wall. The internal end may be generally flat or may have a curved shape.

In an embodiment, the internal wall of the end section is formed with a surface that is substantially free from stress concentration points. This may prevent the occurrence of crack initiation at positions on the internal surface of the end section.
Figure 1 is a cross-sectional view of part of a wind turbine blade mounting element according to a first embodiment of the invention;
Figure 2 is a cross-sectional view of part of a wind turbine blade mounting element according to a second embodiment of the invention;
Figure 3 is a cross-sectional view of part of a wind turbine blade mounting element according to a third embodiment of the invention;
Figure 4 is a cross-sectional view of part of a wind turbine blade mounting element according to a fourth embodiment of the invention;
Figure 5 is a cross-sectional view of part of a wind turbine blade mounting element according to a fifth embodiment of the invention;
Figure 6 is a cross-sectional view of part of a wind turbine blade mounting element according to a sixth embodiment of the invention;
Figure 7 is a cross-sectional view of part of a wind turbine blade mounting element according to a seventh embodiment of the invention;
Figure 8 is a cross-sectional view of part of a wind turbine blade mounting element according to an eighth embodiment of the invention;
Figure 9 is a cross-sectional view of part of a wind turbine blade according to a ninth embodiment of the invention; and
Figure 10 is a cross-sectional view of part of a wind turbine according to a tenth embodiment of the invention.

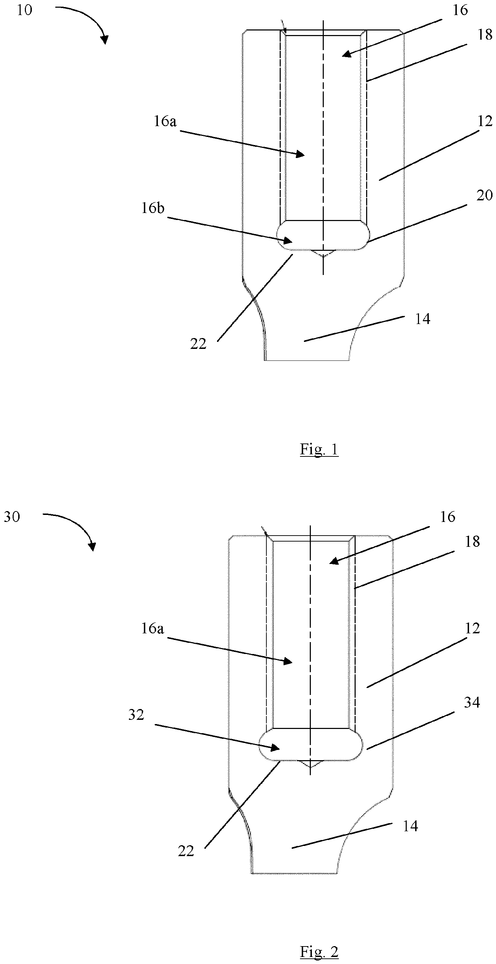

A first embodiment of the invention provides a wind turbine mounting element 10 which is shown in part cross-section in Figure 1. The wind turbine mounting element 10 comprises an attachment part 12 and a blade spar mounting part 14.

The attachment part has a bolt hole 16 provided in it. The bolt hole 16 comprises a bolt receiving section 16a and an end section 16b. The bolt receiving section 16a has an internal wall on which an internal thread 18 is provided along at least part of its length. The end section 16b comprises a generally curved internal wall 20 which extends from one end of the bolt receiving section 16a. The end section 16b has an internal wall having a part circular curved profile. In this example, the bolt hole 16 has a generally flat, blind end 22, which extends across the distal end of the internal wall 20 of the end section 16b.

The blade spar mounting part 14 extends from the attachment part 12, generally away from the bolt hole 16 in this example. Only part of the length of the blade spar is shown in the drawing.

In this example, the mounting element 10 is fabricated from aluminium. The bolt receiving section 16a has a maximum internal diameter of 20mm, to the widest diameter of the thread 18. The end section 16b has a diameter of 21.5mm. The diameter of the end section 16b is therefore greater than the diameter of the bolt receiving section 16a, but as can be seen in the drawings, the diameter of the end section 16b is significantly less than the width of the attachment part 12.

A second embodiment of the invention provides a wind turbine mounting element 30, part of which is shown in cross-section in Figure 2. The wind turbine mounting element 30 of this embodiment is similar to the wind turbine mounting element 10 of Figure 1, with the following modifications. The same reference numbers are retained for corresponding features.

In this embodiment, the end section 32 has a diameter of 23.5mm. As can be seen from the drawing, the internal wall 34 of the end section 32 retains an outwardly curved shape with a part circular curved profile, but has a smaller radius of curvature than the internal wall 20 of Figure 1.

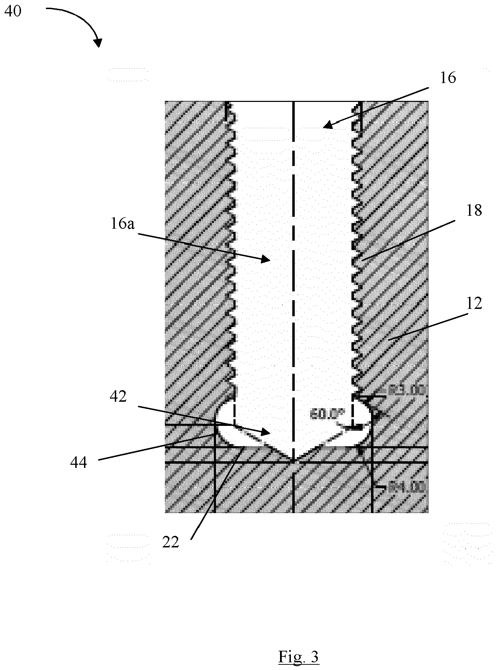

A third embodiment of the invention provides a wind turbine mounting element 40, a cross-sectional view of which is shown in Figure 3. The wind turbine mounting element 40 of this embodiment is similar to the wind turbine mounting element 10 of Figure 1, with the following modifications. The same reference numbers are retained for corresponding features.

In this embodiment, the end section 42 of the bolt hole 16 has an internal wall 44 with an outwardly curved shape, having a part circular curved profile. The internal wall 44 extends from the end of the bolt receiving section 16a of the bolt hole at an angle of approximately 60 degrees to the internal surface of the bolt receiving section 16a.

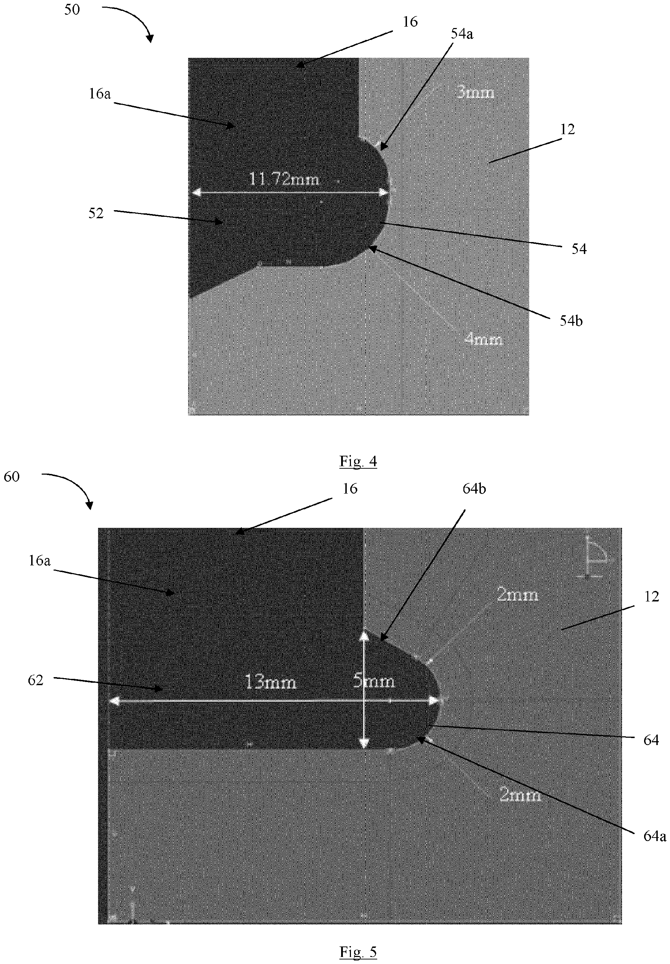

A fourth embodiment of the invention provides a wind turbine mounting element 50 part of which is shown in cross-section in Figure 4. The wind turbine mounting element 50 of this embodiment is similar to the wind turbine mounting element 10 of Figure 1, with the following modifications. The same references are retained for corresponding features.

In this embodiment the end section 52 of the bolt hole 16 has an internal wall 54 which has a generally outwardly curved shape, having a part circular curved profile. The internal wall 54 comprises a first part 54a which has a first radius of curvature, which in this example is 3mm, and a second part 54b which has a larger radius of curvature, in this example 4mm.

A fifth embodiment of the invention provides a wind turbine mounting element 60 part of which is shown in cross-section in Figure 5. The wind turbine mounting element 60 of this embodiment is similar to the wind turbine mounting element 10 of Figure 1, with the following modifications. The same references are retained for corresponding features.

In this embodiment, the end section 62 has an internal wall 64 comprising a first part 64a and a second part 64b. The first part 64a has a part circular curved profile and the second part has a generally straight shape, and extends between the end of the bolt receiving section 16a and the second part 64a.

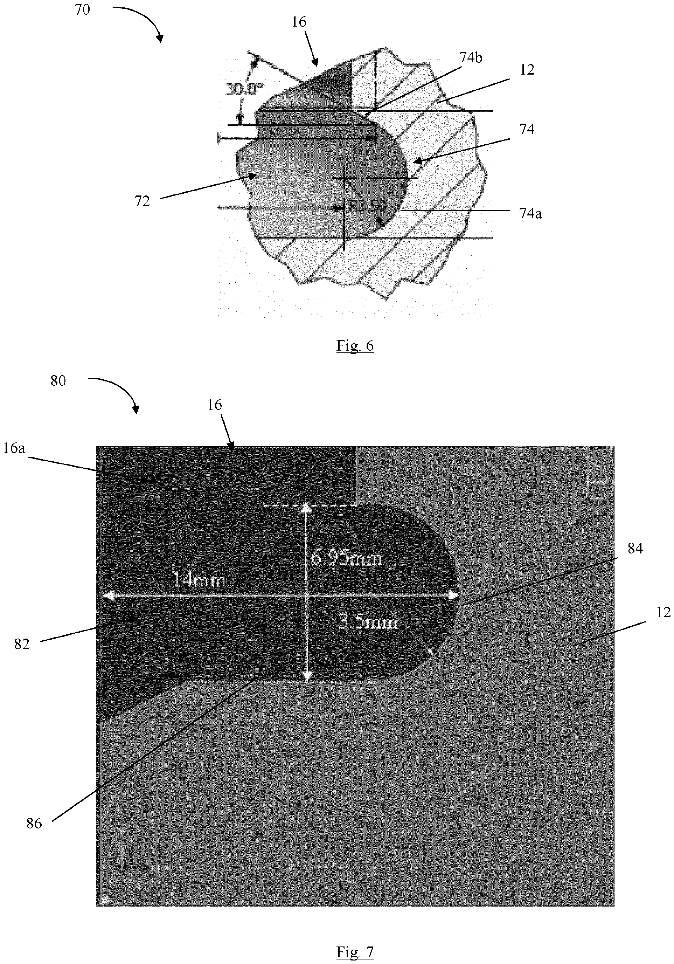

A sixth embodiment of the invention provides a wind turbine mounting element 70 part of which is shown in cross-section in Figure 6. The wind turbine mounting element 70 of this embodiment is similar to the wind turbine mounting element 10 of Figure 1, with the following modifications. The same references are retained for corresponding features.

In this embodiment, the end section 72 of the bolt hole 16 has an internal wall 74 having a generally outwardly curved shape. The internal wall 74 comprises a first part 74a having a part circular curved profile and a second part 74b which is generally straight. The second part 74b extends between the end of the bolt receiving section of the bolt hole 16 and the first part 74a of the internal wall. In this example the first part 74a has a radius of curvature of 3.5mm and the second part 74b extends from the end of the bolt receiving section at an angle of 60 degrees to the internal wall of the bolt receiving section.

A seventh embodiment of the invention provides a wind turbine mounting element 80 part of which is shown in cross-section in Figure 7. The wind turbine mounting element 80 of this embodiment is similar to the wind turbine mounting element 10 of Figure 1, with the following modifications. The same references are retained for corresponding features.

In this embodiment, the end section 82 of the bolt hole 16 has an internal wall 84 having a generally outwardly curved shape. In this example the end section 82 has a diameter of 14mm and the internal wall 84 has a radius of curvature of 3.5mm. As can be seen from the drawing, the separation between the end of the bolt receiving section 16a and the end 86 of the bolt hole 16 is less than twice the radius of curvature of the internal wall 84, being 6.95mm. This indicates that the internal wall 84 has a part circular curved profile which extends for slightly more than one half of a circle.

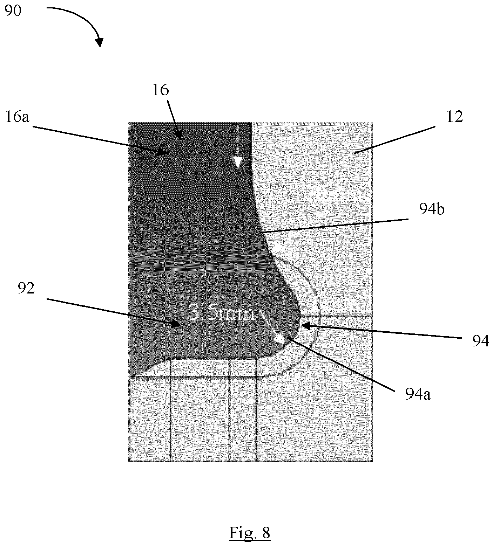

An eighth embodiment of the invention provides a wind turbine mounting element 90 part of which is shown in cross-section in Figure 8. The wind turbine mounting element 90 of this embodiment is similar to the wind turbine mounting element 10 of Figure 1, with the following modifications. The same references are retained for corresponding features.

In this embodiment, the end section 92 of the bolt hole 16 has an internal wall 94 having a generally outwardly curved shape, which in this example is generally nose-shaped. The internal wall 94 comprises a first part 94a which has a part circular curved profile, which in this example has a radius of curvature of 3.5mm. The internal wall 94 also comprises a second part 94b which extends between the end of the internal wall of the bolt receiving section 16a and the first part 94a. In this example, the second part 94b of the internal wall has a gently internally curved shape, that is to say it is curved in the opposite sense to the curve of the first part 94a. The second part 94b has a radius of curvature of 20mm.

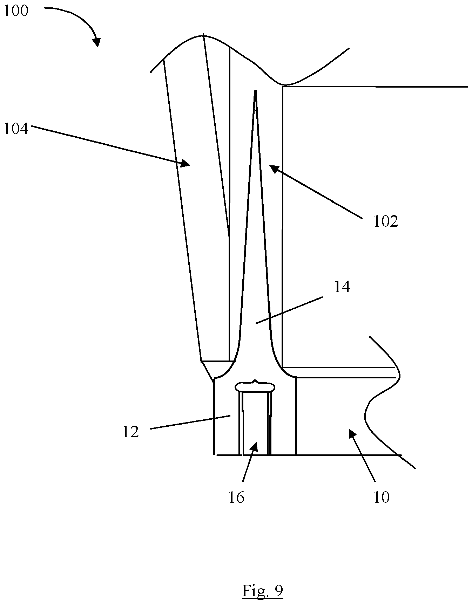

A ninth embodiment of the invention provides a wind turbine blade 100 which is shown in part cross-sectional view in Figure 9. The wind turbine blade 100 comprises a blade spar 102, a blade outer wall 104 and a wind turbine blade mounting element 10.

The wind turbine blade mounting element 10 is as shown in Figure 1 and comprises an attachment part 12, a blade spar mounting part 14 and a bolt hole 16. In this example, the blade spar mounting part 14 has a tapered cross-sectional profile.

The blade outer wall 104 is coupled to the blade spar 102, and the blade spar 102 is mounted on the blade spar mounting part 14.

It will be appreciated by the person skilled in the art that the wind turbine blade 100 may alternatively comprise any of the wind turbine blade mounting elements shown in Figures 2-8.

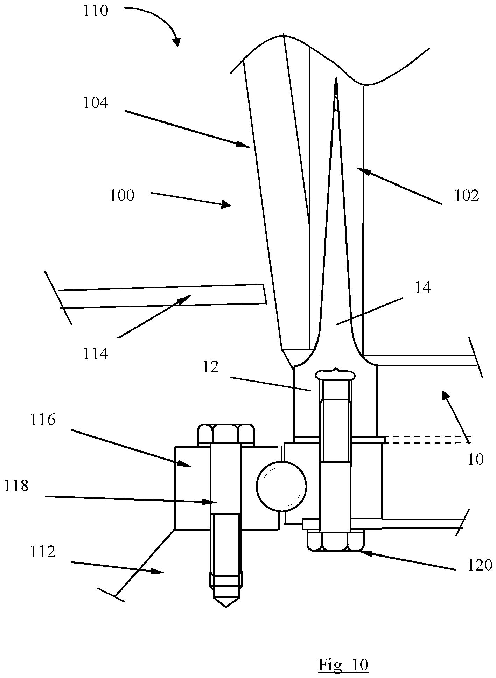

A tenth embodiment of the invention provides a wind turbine 110 as shown in part cross-section in Figure 10. The wind turbine 110 comprises a wind turbine blade 100 as shown in Figure 9.

The wind turbine 110 also comprises a wind turbine generator hub 112 and a nose cone 114. The wind turbine blade 100 is mounted on the wind turbine generator hub 112 via a blade bearing 116 and a hub-to-blade-bearing bolt 118. The wind turbine blade mounting element 10 is connected to the blade bearing 116 by a series of blade-bearing-to-blade bolts 120 which are located in the bolt holes 16 of the wind turbine blade mounting element 10.

An eleventh embodiment of the invention provides a method of removing a crack defect in a wind turbine blade mounting element. The wind turbine attachment element comprises an attachment part and a blade spar mounting part. The attachment part has a bolt hole provided therein which comprises a bolt receiving section and an end section. The end section extends from the end of an internal thread on the bolt receiving section and includes an angled end part which extends generally inwardly of the bolt hole, at an angle to the internal wall of the bolt receiving section. The crack defect extends from the end section.

The method comprises excavating a section of the attachment part around the end section of the bolt hole, to form an enlarged diameter end section. The section which is removed includes the crack defect. As a result of the excavation a new internal wall is formed to the end section which extends from an end of the bolt receiving section and has an outwardly curved shape.

Following the excavation the diameter of the end section is greater than a diameter of the bolt receiving section, but is less than 75 percent of a corresponding width of the attachment part. The newly formed internal wall extends from the end of the bolt receiving section at an angle of between 90 and 20 degrees to the internal wall of the bolt receiving section. An angle of approximately 60 degrees to the internal wall has been found to be most advantageous.

During the excavation an internal end is formed to the end section, which extends across the distal end of the internal wall. The internal end may be generally flat or may have a curved shape.

The internal wall of the end section is formed with a surface that is substantially free from stress concentration points.

## Claims

1. A wind turbine blade mounting element comprising:
an attachment part having at least one bolt hole provided therein, the at least one bolt hole comprising a bolt receiving section and an end section, the bolt receiving section having an internal wall having an internal thread provided along at least part of its length and the end section comprising a generally curved internal wall which extends from an end of the bolt receiving section;
and
a blade spar mounting part extending from the attachment part.

2. A wind turbine blade mounting element as claimed in claim 1, wherein the end section has a diameter which is greater than a diameter of the bolt receiving section and less than 75 percent of a corresponding width of the attachment part.

3. A wind turbine blade mounting element as claimed in claim 1 or claim 2,
wherein the internal wall extends from the end of the bolt receiving section at an angle of between 90 and 20 degrees to the internal wall of the bolt receiving section.

4. A wind turbine blade mounting element as claimed in claim 3, wherein the internal wall extends from the end of the bolt receiving section at an angle of approximately 60 degrees to the internal wall of the bolt receiving section.

5. A wind turbine blade mounting element as claimed in claim 3 or claim 4,
wherein the internal wall has a part-circular curved profile.

6. A wind turbine blade mounting element as claimed in claim 3 or claim 4,
wherein the internal wall comprises a first part having a part-circular curved profile and a second part which extends between the end of the bolt receiving section and the second part, the second part having a generally straight shape or being curved in an opposite sense to the first part.

7. A wind turbine blade mounting element as claimed in any preceding claim,
wherein the internal wall of the end section has a surface that is substantially free from stress concentration points.

8. A wind turbine blade mounting element as claimed in any preceding claim,
wherein the attachment part having a plurality of bolt holes provided therein, the bolt holes being arranged in a spaced series.

9. A wind turbine blade comprising:
a blade spar;
a blade outer wall coupled to the blade spar; and
a wind turbine blade mounting element as claimed in any of claims 1 to 8,
wherein the blade spar is mounted on the blade spar mounting part.

10. A wind turbine comprising at least one wind turbine blade as claimed in claim 9.

11. A method of removing a crack defect in a wind turbine blade mounting element comprising an attachment part and a blade spar mounting part, the attachment part comprising a bolt hole provided therein comprising a bolt receiving section and an end section, the crack defect extending from the end section, the method comprising:
excavating a section of the attachment part around the end section of the bolt hole, the said section including the crack defect, to form an enlarged diameter end section; and
forming an internal wall to the end section, the internal wall extending from an end of the bolt receiving section and having an outwardly curved shape.

12. A method of repairing a crack defect in a wind turbine blade mounting element as claimed in claim 11, wherein the diameter of the end section is greater than a diameter of the bolt receiving section and less than 75 percent of a corresponding width of the attachment part.

13. A method of repairing a crack defect in a wind turbine blade mounting element as claimed in claim 11 or 12, wherein the internal wall extends from the end of the bolt receiving section at an angle of between 90 and 20 degrees to the internal wall of the bolt receiving section.

14. A method of repairing a crack defect in a wind turbine blade mounting element as claimed in claim 13, wherein the internal wall extends from the end of the bolt receiving section at an angle of approximately 60 degrees to the internal wall of the bolt receiving section.

15. A method of repairing a crack defect in a wind turbine blade mounting element as claimed in any of claims 11 to 14, wherein the internal wall of the end section is formed with a surface that is substantially free from stress concentration points.
